# EUROPÄISCHE PATENTSCHRIFT

(11) **EP 2 864 198 B1**
(45) Veröffentlichungstag und Bekanntmachung des Hinweises auf die Patenterteilung: **06.09.2017**
(21) Anmeldenummer: 13730533.0
(22) Anmeldetag: 18.06.2013
(51) Int. Cl.: B64D 11/06, B64D 11/00, B60R 11/02

(54) **SITZ FÜR EIN FAHRZEUG SOWIE FAHRZEUG**
SEAT FOR A VEHICLE AND VEHICLE
SIÈGE POUR UN VÉHICULE AINSI QUE VÉHICULE

(30) Priorität: 25.06.2012 DE 102012210754
(43) Veröffentlichungstag der Anmeldung: 29.04.2015
(73) Patentinhaber: Lufthansa Systems GmbH & Co. KG, 65479 Raunheim (DE)
(72) Erfinder: HOMMEL, Peter, 61348 Bad Homburg (DE); LIEBE, Jörg, 65191 Wiesbaden (DE)
(74) Vertreter: dompatent von Kreisler Selting Werner - Partnerschaft von Patent- und Rechtsanwälten mbB
(86) Internationale Anmeldenummer: PCT/EP2013/062646
(87) Internationale Veröffentlichungsnummer: WO 2014/001155

(56) Entgegenhaltungen:
- WO-A2-2007/024443
- GB-A- 2 422 948
- US-A1- 2005 132 407
- US-A1- 2010 007 805
- US-B1- 6 370 037

## Beschreibung

Die vorliegende Erfindung betrifft einen Sitz für ein Fahrzeug, insbesondere Luftfahrzeug, mit einem integrierten visuellen Wiedergabegerät sowie ein Fahrzeug mit einem derartigen Sitz.

In Fahrzeugsitze, insbesondere in die Sitze von Verkehrsmitteln wie Flugzeuge, Busse, Züge oder Schiffe, werden häufig in eine Fläche des Sitzes, beispielsweise die Sitzrückwand, ein Bildschirm integriert, um dahinter sitzende Personen während der Reise zu unterhalten.

Die bekannten in Sitze integrierte Bildschirme, sogenannte In-seat-Screens, sind zumeist Spezialanfertigungen, die für den entsprechenden Anwendungszweck konstruiert und hergestellt werden. Die In-seat-Screens sind somit keine standardisierten Bildschirme.

Die Konstruktion und der Entwurf eines Sitzes mit integrierten Bildschirmen ist somit ein langwieriger und kostenintensiver Prozess. Häufig werden ein Jahr und länger benötigt, um einen geeigneten Bildschirm und einen Sitz mit entsprechendem Bildschirm zu konstruieren. Die bekannten In-seat-Screens sind ferner fest in den Sitz integriert, so dass ein Austausch des Bildschirms bei einem Defekt oder bei einer Modernisierungsmaßnahme sehr aufwändig ist.

US 2010/0007805 A1 offenbart einen Sitz für ein Fahrzeug, bei dem eine Halterung als Lade aus einer Basis ausgefahren werden kann, in die ein visuelles Wiedergabegerät eingesetzt werden kann.

US 6,370,037 B1 offenbart ein Sitz für ein Fahrzeug gemäß dem Oberbegriff von Anspruch 1 und beschreibt ein in die Fläche eines Armaturenbretts eines Fahrzeugs integriertes Wiedergabegerät, das über eine Basis und eine Halterung, die die Merkmale der Basis und der Halterung des Oberbegriffs des Anspruchs 1 aufweisen, befestigt ist.

Es ist daher die Aufgabe der vorliegenden Erfindung, einen Sitz für ein Fahrzeug mit einem in den Sitz integrierten visuellen Wiedergabegerät bereitzustellen, der von einfachem Aufbau ist, wobei darüber hinaus die Wartung und ein Austausch des Wiedergabegerätes vereinfacht ist und wobei die Sicherheit für Passagiere des Fahrzeugs erhöht ist.

Der erfindungsgemäße Sitz für ein Fahrzeug, insbesondere ein Luftfahrzeug, ist definiert durch die Merkmale des Patentanspruchs 1.

Der Sitz für ein Fahrzeug, insbesondere Verkehrsmittel wie beispielsweise ein Luftfahrzeug, weist ein in einer Fläche des Sitzes, insbesondere in der Sitzrückwand, integriertes visuelles Wiedergabegerät auf. In der Fläche des Sitzes ist eine fest mit dem Sitz verbundene Basis angeordnet. Das visuelle Wiedergabegerät ist über eine an das visuelle Wiedergabegerät und die Basis angepasste Halterung an der Basis befestigt, wobei das visuelle Wiedergabegerät über eine lösbare Befestigung der Halterung an der Basis aus der Basis herausnehmbar ist. Fest mit dem Sitz verbunden heißt im Rahmen der Erfindung, dass die Basis in den Sitz integriert ist, so dass die Basis nur durch aufwändige Ausbaumaßnahmen, wie beispielsweise das Entfernen eines Teils der Sitzrückwand, aus dem Sitz ausgebaut werden kann. Lösbar befestigt heißt im Rahmen der Erfindung, dass die Halterung mit einfachen Mitteln, wie beispielsweise durch die manuelle Betätigung einer Riegelvorrichtung, durch geringen Kraftaufwand oder durch die Verwendung eines einfachen Werkzeugs von der Basis lösbar ist.

Der erfindungsgemäße Sitz ermöglicht die Verwendung von kommerziell verfügbaren, beispielsweise standardisierten visuellen Wiedergabegeräten, die über die angepasste Halterung auf einfache Art und Weise an der Basis befestigt und somit in einer Fläche des Sitzes integriert werden können. Durch die lösbare Befestigung der Halterung an der Basis kann das visuelle Wiedergabegerät für Wartungszwecke auf einfache Art und Weise von dem Sitz gelöst werden. Bei einem Defekt des visuellen Wiedergabegeräts kann dieses auch auf einfache Art und Weise aus der Basis herausgenommen und ausgetauscht werden. Dadurch können die Wartungskosten für die visuellen Wiedergabegeräte deutlich reduziert werden.

Die Erfindung ermöglicht auch eine vereinfachte Modernisierung des Sitzes bzw. des Fahrzeuges, indem das visuelle Wiedergabegerät durch ein modernes ersetzt wird. Dabei ist lediglich eine Anpassung der Halterung an ein neues visuelles Wiedergabegerät notwendig. Die fest mit dem Sitz verbundene Basis kann an dem Sitz verbleiben.

Darüber hinaus kann der erfindungsgemäße Sitz mit unterschiedlichen visuellen Wiedergabegeräten kombiniert werden. Bei der Verwendung des erfindungsgemäßen Sitzes in einem Verkehrsmittel, wie beispielsweise einem Flugzeug, können von der Fluggesellschaft die visuellen Wiedergabegeräte mit Halterung zur Verfügung gestellt werden, um diese an der Basis eines Sitzes zu befestigen. Darüber hinaus ist es auch möglich, dass ein Passagier ein eigenes visuelles Wiedergabegerät über eine an dieses Gerät angepasste Halterung an der Basis eines Sitzes befestigt.

Da fest in einem Verkehrsmittel eingebaute elektronische Geräte, wie beispielsweise die vorbekannten In-seat-Screens, Sicherheitsrisiken darstellen, müssen diese teilweise aufwändige sicherheitstechnische Zulassungen durchlaufen. Da bei dem erfindungsgemäßen Sitz das visuelle Wiedergabegerät lösbar an der Basis befestigt ist, kann dies auch zu vereinfachten Zulassungsverfahren führen.

Die an die Basis angepasste Halterung weist einen inneren Rahmen auf, in den das visuelle Wiedergabegerät einsetzbar ist. Dadurch lässt sich das Wiedergabegerät in vorteilhafter Weise mit der Halterung verbinden, so dass eine Befestigung des Wiedergabegeräts an der Basis auf einfache Weise möglich ist. Dabei ist vorgesehen, dass das Wiedergabegerät in dem inneren Rahmen fixiert ist. Beispielsweise ist es möglich, das visuelle Wiedergabegerät mit der Halterung in die Basis einzuclipsen.

Die Sicherungsvorrichtung weist einen Laden, vorzugsweise Rollladen oder Schiebeladen, zum Abdecken des visuellen Wiedergabegerätes und der Halterung auf. Über den Laden lässt sich das visuelle Wiedergabegerät und die Halterung in vorteilhafter Weise an der Basis sichern, so dass bei der Verwendung des erfindungsgemäßen Sitzes, beispielsweise in einem Flugzeug, Verletzungen bei Zwischenfällen, wie beispielsweise einer Notfalllandung, aufgrund von sich lösenden visuellen Wiedergabegeräten verhindert werden können. Über den Laden kann ferner das visuelle Wiedergabegerät vollständig abgedeckt werden, so dass es bei Zwischenfällen auch nicht zu Verletzungen kommen kann, indem ein Passagier beispielsweise mit dem Kopf direkt auf dem visuellen Wiedergabegerät auftrifft. Der Laden dient somit als eine Art Schutzladen. Dadurch wird für die Verwendung eines Sitzes mit dem visuellen Wiedergabegerät keine separate Zulassung erforderlich, sondern lediglich der Sitz mit dem Schutzladen muss das Zulassungsverfahren durchlaufen. Die Sicherungsvorrichtung kann zusätzlich beispielsweise als ein federbetätigter Riegel ausgebildet sein. Zur Lösung der Halterung von der Basis muss dann der Riegel betätigt werden, um die Halterung und somit das visuelle Wiedergabegerät von der Basis zu lösen.

Vorzugsweise ist vorgesehen, dass das visuelle Wiedergabegerät ein Tablet-Computer ist. Das visuelle Wiedergabegerät kann somit Teil eines Unterhaltungssystems, beispielsweise eines Unterhaltungsnetzwerks, des Fahrzeugs sein. Die Ausführung des visuellen Wiedergabegeräts als Tablet-Computer ermöglicht neben einer visuellen Darstellung von Daten, wie beispielsweise Filmen, auch eine Interaktion des Nutzers mit dem visuellen Wiedergabegerät, beispielsweise über einen Touchscreen. Darüber hinaus sind Tablet-Computer kommerziell im großen Maße und somit kostengünstig verfügbar, so dass ein Kostenvorteil gegenüber den vorbekannten, fest in den Sitzen integrierten In-seat Screens besteht.

Die lösbare Befestigung des Wiedergabegerätes an der Basis und somit dem Sitz ermöglicht darüber hinaus dem Nutzer, das visuelle Wiedergabegerät während der Nutzung von dem Sitz zu lösen und es beispielsweise in der Hand zu halten. Dies ist insbesondere bei der Verwendung von Tablet-Computern als visuelles Wiedergabegerät von Vorteil, da somit die Bedienung und Interaktion vereinfacht wird. Dabei muss selbstverständlich für eine ausreichende Stromversorgung des visuellen Wiedergabegerätes gesorgt werden.

In einem bevorzugten Ausführungsbeispiel der Erfindung ist vorgesehen, dass die Basis einen äußeren Rahmen aufweist, in den die Halterung mit dem visuellen Wiedergabegerät einsetzbar ist. Auf diese Weise lässt sich die Halterung in vorteilhafter Weise lösbar an der Basis befestigen. Die Basis kann eine Vertiefung in der Fläche des Sitzes bilden, wobei das visuelle Wiedergabegerät mit der Halterung in die Vertiefung einsetzbar ist und vorzugsweise bündig mit der Fläche des Sitzes abschließt. Auf diese Weise kann das visuelle Wiedergabegerät sehr platzsparend in den Sitz integriert werden, wobei durch den bündigen Abschluss mit der Fläche des Sitzes ein optisch ansprechendes Design geschaffen wird.

In einem bevorzugten Ausführungsbeispiel der Erfindung ist vorgesehen, dass die Basis mit einem zentralen Stromversorgungsnetz verbunden ist, das eine lösbare Stromverbindung zwischen der Basis und der Halterung angeordnet ist und das die Halterung einen Anschluss für den Stromversorgungsanschluss des visuellen Wiedergabegeräts aufweist, wobei das visuelle Wiedergabegerät über die Basis, die lösbare Stromverbindung und die Halterung mit dem zentralen Stromversorgungsnetz verbindbar ist.

Auf diese Weise lässt sich das visuelle Wiedergabegerät in vorteilhafter Weise mit der notwendigen elektrischen Energie versorgen. Das erfindungsgemäße System ermöglicht dabei, dass das visuelle Wiedergabegerät einen eigenen Energiespeicher, beispielsweise einen Akkumulator, aufweisen kann, so dass dieser bei der Befestigung des visuellen Wiedergabegerätes an der Basis über das zentrale Stromversorgungsnetz wiederaufgeladen werden kann. Alternativ ist auch eine Verwendung von visuellen Wiedergabegeräten ohne eigenen Energiespeicher möglich, so dass das visuelle Wiedergabegerät nur im an der Basis befestigten Zustand funktionstüchtig ist. Dies kann beispielsweise bei der Verwendung der erfindungsgemäßen Sitze in Flugzeugen von Vorteil sein, da Batterien oder Akkumulatoren unzuverlässig sein können und darüber hinaus zur Überhitzung neigen. Dies kann insbesondere bei der Verwendung in Flugzeugen ein Sicherheitsproblem darstellen.

Der in der Halterung vorhandene Anschluss für den Stromversorgungsanschluss des visuellen Wiedergabegerätes kann beispielsweise ein standardisierter Anschluss, wie beispielsweise ein USB-Anschluss, sein, der häufig bei Tablet-Computern zur Stromversorgung verwendet wird.

Die lösbare Stromverbindung zwischen der Basis und der Halterung kann eine Schnellkontaktverbindung, wie beispielsweise eine Steckverbindung oder ein Berührungskontakt, der beispielsweise Federkontakte aufweist, sein.

In einem besonders bevorzugten Ausführungsbeispiel der Erfindung ist vorgesehen, dass das Stromversorgungsnetz ein Niedervoltgleichstromnetz ist. Das Stromversorgungsnetz kann dadurch die üblicherweise bei visuellen Wiedergabegeräten, wie beispielsweise bei Tablet-Computern, notwendige Spannung bereitstellen, ohne dass ein komplexes, aufwändiges Wechselstromnetz notwendig ist. Das Gleichstromnetz kann darüber hinaus gewichtsparend verwirklicht werden, was insbesondere bei der Verwendung des erfindungsgemäßen Sitzes in einem Flugzeug von Vorteil ist.

Der Sitz bzw. die Basis kann eine Sicherungsvorrichtung zur Sicherung der Halterung an der Basis aufweisen.

Der Laden kann beispielsweise als Rollladen ausgebildet sein, der beispielsweise von oben oder von der Seite über das Wiedergabegerät gezogen wird. Alternativ kann der Laden auch als Aufsetzladen ausgebildet sein, der als separates Teil befestigt wird. Der Aufsetzladen kann beispielsweise an dem Sitz, an der Basis und/oder an der Halterung befestigbar sein. Der Aufsetzladen kann aufgesteckt, aufgeklemmt oder auch mit separaten Sicherungsmitteln befestigt sein. Es kann auch vorgesehen sein, dass der an einem Sitz bereits vorhandene Klapptisch als Laden, der das visuelle Wiedergabegerät abdeckt, verwendet wird.

Es kann vorgesehen sein, dass das visuelle Wiedergabegerät eine drahtlose Datenkommunikationsschnittstelle aufweist. Auf diese Weise lässt sich das visuelle Wiedergabegerät in vorteilhafter Weise mit einem am Fahrzeug befindlichen Unterhaltungsnetzwerk verbinden. Selbstverständlich ist es auch möglich, dass das visuelle Wiedergabegerät über eine drahtgebundene Datenkommunikationsschnittstelle verfügt, die an ein zentrales Datenkommunikationsnetzwerk angeschlossen werden kann. Dazu ist es möglich, dass die Basis mit dem Datenkommunikationsnetz verbunden ist, dass eine lösbare Datenkommunikationsverbindung zwischen der Basis und der Halterung angeordnet ist und dass die Halterung einen Anschluss für den Datenkommunikationsanschluss des visuellen Wiedergabegerätes aufweist. Die Verbindung des visuellen Wiedergabegerätes mit dem Datenkommunikationsnetzwerk erfolgt somit in ähnlicher Weise wie die Verbindung des visuellen Wiedergabegerätes mit dem zentralen Stromversorgungsnetz. Alternativ kann die Datenkommunikation auch über das Stromversorgungsnetzwerk erfolgen.

Die Erfindung sieht ferner ein Fahrzeug, insbesondere ein Flugzeug, mit mehreren erfindungsgemäßen Sitzen vor, das ein Unterhaltungsnetzwerk aufweist, das mit den visuellen Wiedergabegeräten in Datenkommunikationsverbindung steht.

Es kann vorgesehen sein, dass bei dem Fahrzeug mehrere Sitze jeweils eine Basis von identischem Aufbau aufweisen, wobei mindestens ein visuelles Wiedergabegerät eines Sitzes von unterschiedlichem Aufbau zu den visuellen Wiedergabegeräten der anderen Sitze ist. Das von den anderen visuellen Wiedergabegeräten unterschiedliche Gerät ist über eine entsprechend an dieses Gerät angepasste Halterung an einer der Basen befestigt, wohingegen die anderen visuellen Wiedergabegeräte eine unterschiedliche Halterung zur Befestigung an einer der Basen aufweisen. Dadurch lässt sich ein Fahrzeug an unterschiedliche Anforderungen anpassen. Durch die Möglichkeit, unterschiedliche Wiedergabegeräte zu verwenden, können beispielsweise visuelle Wiedergabegeräte von unterschiedlicher Leistung in einem Fahrzeug eingesetzt werden. Somit lassen sich beispielsweise in einem Flugzeug in der First Class oder Business Class höherwertige Geräte verwenden als beispielsweise in der Economy Class, wobei alle Sitze die gleiche Basis aufweisen. Somit ist dennoch ein Austausch der unterschiedlichen Geräte möglich.

Die Erfindung kann ferner ein Sicherheitssystem vorsehen, das erkennt, ob ein visuelles Wiedergabegerät an der Basis befestigt ist. Dies kann beispielsweise über das Stromversorgungsnetz oder das Datenkommunikationsnetz erfolgen.

Auch ist es möglich, dass die Sicherheitsvorrichtung sperrbar ist. Dies kann beispielsweise zentral erfolgen, so dass bei der Verwendung eines erfindungsgemäßen Sitzes in einem Flugzeug zu bestimmten Flugsituationen, wie beispielsweise Start und Landung, ein Lösen des visuellen Wiedergabegerätes von der Basis verhindert wird.

Das Sicherheitssystem kann beispielsweise auch eine elektronische Vorrichtung, wie beispielsweise einen Chip, in der Halterung vorsehen, über den festgestellt werden kann, ob das visuelle Wiedergabegerät mit der Halterung an der Basis befestigt ist. Alternativ oder zusätzlich kann über den Chip auch ein unerlaubtes Entwenden des visuellen Wiedergabegerätes aus dem Fahrzeug registriert werden.

Im Folgenden wird unter Bezugnahme auf die nachfolgenden Figuren die Erfindung näher erläutert. Es zeigen:

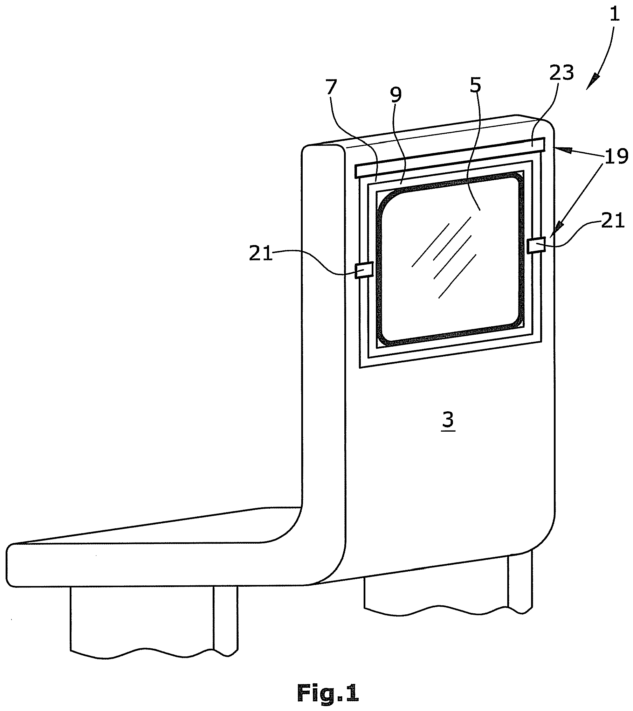

- Fig.1: eine schematische Ansicht eines erfindungsgemäßen Sitzes perspektivisch dargestellt,
- Fig. 2: eine schematische Schnittdarstellung der Rückenlehne eines ersten Ausführungsbeispiels eines erfindungsgemäßen Sitzes und
- Fig. 3: eine schematische Schnittdarstellung der Rückenlehne eines zweiten Ausführungsbeispiels eines erfindungsgemäßen Sitzes.

In den Fign. sind zwei Ausführungsbeispiele erfindungsgemäßer Sitze 1 für ein Fahrzeug, insbesondere ein Luftfahrzeug, schematisch dargestellt.

In einer Fläche 3 des Sitzes 1 ist ein visuelles Wiedergabegerät 5 integriert. In den in den Fign. dargestellten Ausführungsbeispielen ist die Fläche 3 des Sitzes 1 die Sitzrückwand, so dass das integrierte visuelle Wiedergabegerät 5 von einer hinter dem Sitz 1 befindlichen Person genutzt werden kann.

In der Fläche 3 des Sitzes 1 ist eine fest mit dem Sitz 1 verbundene Basis 7 angeordnet. Die Basis 7 ist in dem in den Fign. dargestellten Ausführungsbeispiel mit einem äußeren Rahmen ausgebildet, der eine Vertiefung 10 in der Fläche 3 des Sitzes 1 bildet. Die Basis 7 kann beispielsweise mit dem Sitz 1 verschraubt, vernietet oder verklebt sein.

Das visuelle Wiedergabegerät 5, das beispielsweise ein Tablet-Computer sein kann, ist über eine an das visuelle Wiedergabegerät 5 angepasste Halterung 9 lösbar an der Basis 7 befestigt. Die Halterung 9 ist dabei ebenfalls an die Basis 7 angepasst. Die Halterung 9 weist einen inneren Rahmen 11 auf, in den das visuelle Wiedergabegerät 5 einsetzbar ist. Das visuelle Wiedergabegerät 5 ist in dem inneren Rahmen 11 fixiert, beispielsweise über eine Klemmverbindung, eingeclipst oder anderweitig kraft- oder formschlüssig gehaltert.

Über die Halterung 9 lässt sich das visuelle Wiedergabegerät 5 derart in die Vertiefung 10 der Basis 7 einsetzen, dass das visuelle Wiedergabegerät 5 bündig mit der Fläche 3 des Sitzes abschließt.

Die Basis 7 ist über eine in dem Sitz 3 integrierte Stromleitung 13 mit einem nicht dargestellten zentralen Stromversorgungsnetz verbunden, wobei eine lösbare Stromverbindung 15, beispielsweise einer Schnellkontaktverbindung, wie beispielsweise einem Berührungskontakt, zwischen der Basis 7 und der Halterung 9 angeordnet ist. Die Halterung 9 weist ferner einen Anschluss 17 für den Stromversorgungsanschluss des visuellen Wiedergabegerätes 5 auf. Das visuelle Wiedergabegerät 5 ist somit über die Basis 7, die lösbare Stromverbindung 15 und die Halterung 9 mit dem zentralen Stromversorgungsnetz verbindbar. Über eine vergleichbar ausgebildete elektrische Verbindung oder auch über eine separate, ähnlich ausgebildete Verbindung, kann das visuelle Wiedergabegerät 5 auch mit einem Datenkommunikationsnetzwerk verbunden sein. Zusätzlich oder alternativ ist es möglich, dass das visuelle Wiedergabegerät 5 eine drahtlose Schnittstelle, beispielsweise nach WLAN-Standard, aufweist, mit der eine Verbindung zu einem drahtlosen Datenkommunikationsnetzwerk möglich ist.

Das Stromversorgungsnetz kann beispielsweise ein Niedervoltgleichstromnetz zwischen 5 und 12 V sein. Derartige Spannungen sind üblicherweise ausreichend für Tablet-Computer, so dass ein derartiges Stromversorgungsnetz ausreichend für die Stromversorgung des visuellen Wiedergabegerätes 5 ist.

Der Sitz 1 weist ferner eine Sicherungsvorrichtung 19 zur Sicherung der Halterung 9 an der Basis 7 und somit zur Sicherung des visuellen Wiedergabegerätes 5 auf. Die Sicherungsvorrichtung 19 kann beispielsweise Federriegel 21 aufweisen, die die Halterung 9 in der Basis 7 halten. Die Sicherungsvorrichtung 19 weist ferner einen Laden 23 aufweisen, über den das visuelle Wiedergabegerät 5 und die Halterung 9 abgedeckt und somit abgeschottet werden können.

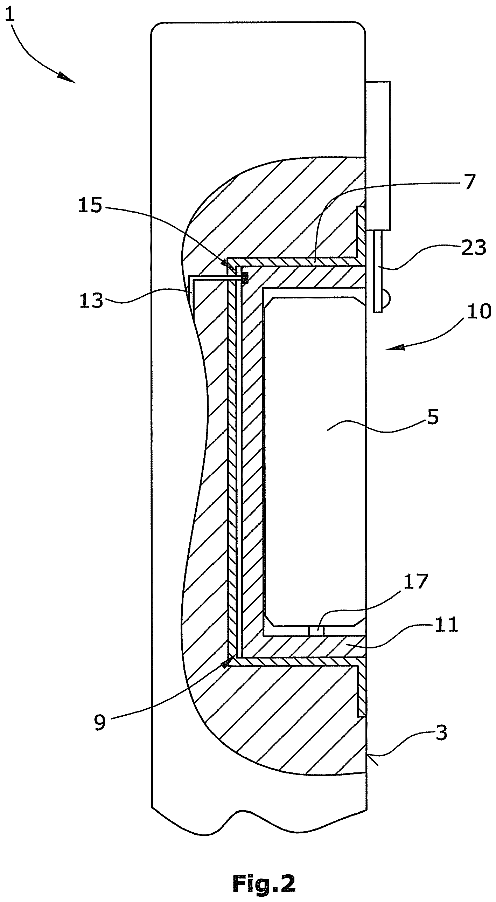

Bei dem in Fig. 2 dargestellten Ausführungsbeispiel des Sitzes ist der Laden 23 als Rollladen ausgebildet, der, wie in Fig. 2 dargestellt ist, von oben über das visuelle Wiedergabegerät 5 gezogen werden kann. Selbstverständlich ist es auch möglich, dass der Rollladen seitlich des Wiedergabegerätes 5 angeordnet ist, so dass dieser von der Seite über das visuelle Wiedergabegerät 5 gezogen werden kann.

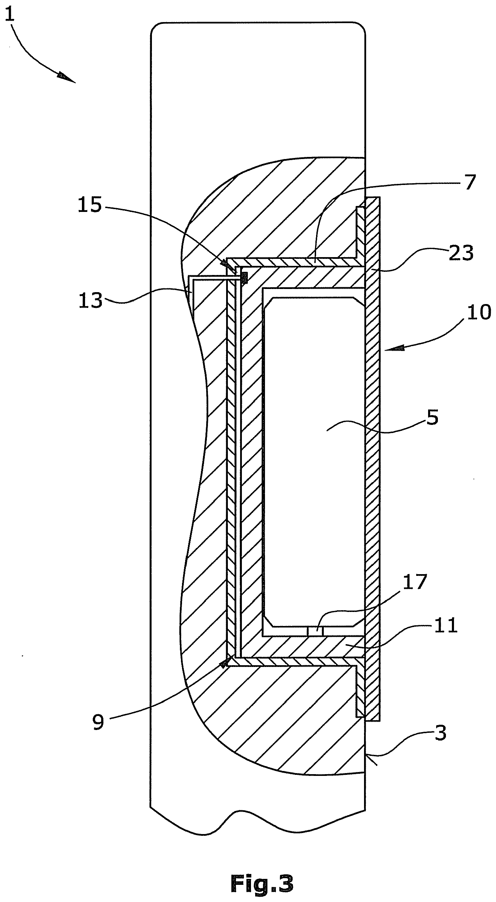

In einem alternativen Ausführungsbeispiel der vorliegenden Erfindung, das schematisch in der Fig. 3 dargestellt ist, weist die Sicherungsvorrichtung 19 einen Laden 23 auf, der als Aufsetzladen ausgebildet ist. Der Aufsetzladen ist als separates Teil ausgebildet, und wird an dem Sitz 1, das visuelle Wiedergabegerät 5 überdeckend befestigt. Dabei kann der Aufsetzladen an der Fläche 3 des Sitzes 1, der Halterung 9 und/oder der Basis 7 befestigt sein. Der Aufsetzladen kann beispielsweise klemmend, formschlüssig, durch separate Sicherungsmittel oder auch magnetisch befestigt werden. In einem nicht dargestellten Ausführungsbeispiel ist vorgesehen, dass ein an der Fläche 3 des Sitzes 1 angeordneter Klapptisch als Laden 23 dient.

Der Laden 23 bietet darüber hinaus den Vorteil, dass Bordpersonal auf einfache Art und Weise feststellen kann, ob beispielsweise vor dem Start oder der Landung das visuelle Wiedergabegerät 5 richtig gesichert ist. Dies kann beispielsweise erfolgen, indem überprüft wird, ob ein Laden 23 vollständig verschlossen ist.

Das visuelle Wiedergabegerät 5 kann einen eigenen Energiespeicher, beispielsweise eine Batterie oder einen Akkumulator aufweisen oder auch ohne Energiespeicher ausgebildet sein, so dass es nur bei geschlossener lösbarer Stromverbindung 15 funktionstüchtig ist.

Das visuelle Wiedergabegerät 5 kann Teil eines Unterhaltungsnetzwerkes sein, mit dem es in Datenkommunikationsverbindung steht. Über das visuelle Wiedergabegerät 5 können somit beispielsweise Film- oder Bilddaten, wie beispielsweise Videos, dargestellt werden oder das visuelle Wiedergabegerät 5 ermöglicht einen Zugang des Nutzers zum Internet. Durch die lösbare Verbindung zwischen der Halterung 9 und der Basis 7 lässt sich das visuelle Wiedergabegerät 5 auf einfache Art und Weise von dem Sitz 1 lösen, so dass beispielsweise ein Nutzer, eine entsprechende Stromversorgung vorausgesetzt, das visuelle Wiedergabegerät 5 in der Hand haltend oder auf seinem Schoß abgelegt nutzen kann. Auch ermöglicht die lösbare Befestigung der Halterung 9 an der Basis 7, dass das visuelle Wiedergabegerät 5 zu Wartungszwecken oder wenn es ausgetauscht werden soll, auf einfache Art und Weise von dem Sitz 1 abgenommen werden kann. Dadurch werden die Wartungsarbeiten wesentlich vereinfacht und können kostengünstiger ausgeführt werden. Darüber hinaus kann der erfindungsgemäße Sitz 1 auf einfache Art und Weise modernisiert werden, indem ein vorhandenes, bereits veraltetes visuelles Wiedergabegerät 5 durch ein neues zeitgemäßes visuelles Wiedergabegerät 5 ausgetauscht wird. Bei der Verwendung des erfindungsgemäßen Sitzes 1 mit einem neuen visuellen Wiedergabegerät 5 ist lediglich eine Neukonstruktion der Halterung 9 notwendig, da diese an das neue Wiedergabegerät 5 angepasst werden muss. Die Basis 7 kann in dem Sitz 1 verbleiben, so dass der Konstruktions- und Umbauaufwand bei der Modernisierung eines erfindungsgemäßen Sitzes 1 sehr gering gehalten wird.

Bei der Verwendung des erfindungsgemäßen Sitzes 1 in einem Verkehrsmittel, wie beispielsweise einem Flugzeug, besteht die Möglichkeit, dass die visuellen Wiedergabegeräte 5 zusammen mit der Halterung 9 zentral bereitgehalten werden und es auf Wunsch an die Passagiere verteilt werden kann. Darüber hinaus besteht die Möglichkeit, dass ein Passagier seinen eigenen Tablet-Computer in dem erfindungsgemäßen Sitz 1 verwendet, wobei der Passagier oder die Fluggesellschaft diesbezüglich eine an das entsprechende Gerät angepasste Halterung 9 bereithalten muss.

## Patentansprüche

1. Sitz (1) für ein Fahrzeug, insbesondere Luftfahrzeug, mit einem in einer Fläche (3) des Sitzes (1) integrierten visuellen Wiedergabegerät (5),
wobei in der Fläche (3) des Sitzes (1) eine fest mit dem Sitz (1) verbundene Basis (7) angeordnet ist, wobei das visuelle Wiedergabegerät (5) über eine an das visuelle Wiedergabegerät (5) und die Basis (3) angepasste Halterung (19) an der Basis (7) befestigt ist, wobei das visuelle Wiedergabegerät über eine lösbare Befestigung der Halterung (9) an der Basis (7) aus der Basis (7) herausnehmbar ist und die Halterung (9) einen inneren Rahmen (11) aufweist, in den das visuelle Wiedergabegerät (5) einsetzbar ist, und wobei das visuelle Wiedergabegerät (5) in dem inneren Rahmen (11) fixiert ist,
**gekennzeichnet durch**
eine Sicherungsvorrichtung (19) zur Sicherung der Halterung (9) an der Basis (7), wobei die Sicherungsvorrichtung (19) einen Laden (23) zum Abdecken des visuellen Wiedergabegerätes (5) und der Halterung (9) aufweist.

2. Sitz nach Anspruch 1, **dadurch gekennzeichnet, dass** das visuelle Wiedergabegerät (5) ein Tablet-Computer ist.

3. Sitz nach Anspruch 1 oder 2, **dadurch gekennzeichnet, dass** die Basis (7) aus einem äußeren Rahmen besteht, in den die Halterung (9) mit dem visuellen Wiedergabegerät (5) eingesetzt ist.

4. Sitz nach einem der Ansprüche 1 bis 3, **dadurch gekennzeichnet, dass** die Basis (7) eine Vertiefung (10) in der Fläche (3) des Sitzes (1) bildet, wobei das visuelle Wiedergabegerät (5) mit der Halterung (9) in die Vertiefung (10) einsetzbar ist und vorzugsweise bündig mit der Fläche (3) des Sitzes (1) abschließt.

5. Sitz nach einem der Ansprüche 1 bis 4, **dadurch gekennzeichnet, dass** die Basis (7) mit einem zentralen Stromversorgungsnetz verbunden ist, dass eine lösbare Stromverbindung (15) zwischen der Basis (7) und der Halterung (9) angeordnet ist und dass die Halterung (9) einen Anschluss (17) für den Stromversorgungsanschluss des visuellen Wiedergabegerätes (5) aufweist, wobei das visuelle Wiedergabegerät (5) über die Basis (7), die lösbare Stromverbindung (15) und die Halterung (9) mit dem zentralen Stromversorgungsnetz verbindbar ist.

6. Sitz nach Anspruch 5, **dadurch gekennzeichnet, dass** die lösbare Stromverbindung eine Schnellkontaktverbindung ist.

7. Sitz nach Anspruch 5 oder 6, **dadurch gekennzeichnet, dass** das Stromversorgungsnetz ein Niedervoltgleichstromnetz ist.

8. Sitz nach einem der Ansprüche 1 bis 7, **dadurch gekennzeichnet, dass** der Laden (23) als Rollladen oder als Aufsetzladen ausgebildet ist.

9. Sitz nach einem der Ansprüche 1 bis 8, **dadurch gekennzeichnet, dass** das visuelle Wiedergabegerät (5) eine drahtlose Datenkommunikationsschnittstelle aufweist.

10. Fahrzeug mit mehreren Sitzen nach einem der Ansprüche 1 bis 9 und mit einem Unterhaltungsnetzwerk, das mit dem visuellen Wiedergabegerät (5) in Datenkommunikationsverbindung steht.

11. Fahrzeug nach Anspruch 10, **dadurch gekennzeichnet, dass** die mehreren Sitze jeweils eine Basis von identischem Aufbau aufweisen, wobei mindestens ein visuelles Wiedergabegerät (5) eines Sitzes (1) von unterschiedlichem Aufbau zu den visuellen Wiedergabegeräten (5) der anderen Sitze (1) ist.

## Claims

1. A seat (1) for a vehicle, particularly an aircraft, having a visual playback device (5) integrated in a surface (3) of the seat (1), wherein a base (7) firmly connected to the seat (1) is arranged in the surface (3) of the seat (1), said visual playback device (5) being attached to the base (7) by means of a holder (9) adapted to the visual playback device (5) and the base (7),
wherein, by a releasable attachment of the holder (9) to the base (7), the visual playback device (5) is adapted to be removed from the base (7) and the holder (9) comprises an inner frame (11) into which the visual playback device (5) can be inserted, and wherein the visual playback device (5) is fixed in the inner frame (11),
**characterized by**
a securing device (19) for securing the holder (9) to the base (7), wherein the securing device (19) has a shutter (23) for covering the visual playback device (5) and the holder (9).

2. The seat of claim 1, **characterized in that** the visual playback device (5) is a tablet computer.

3. The seat of claim 1 or 2, **characterized in that** the base (7) comprises an outer frame into which the holder (9) with the visual playback device (5) is inserted.

4. The seat of one of claims 1 to 3, **characterized in that** the base (7) forms a recess (10) in the surface (3) of the seat (1), the visual playback device (5) being adapted to be inserted into the recess (10) together with the holder (9) and preferably fitting flush with the surface (3) of the seat (1).

5. The seat of one of claims 1 to 4, **characterized in that** the base (7) is connected with a central power supply network, that a detachable power connection (15) is arranged between the base (7) and the holder (9), and that the holder (9) has a connector (17) for connection of the visual playback device (5) to the power supply, the visual playback device (5) being connectable with the central power supply network via the base (7), the detachable power connection (15) and the holder (9).

6. The seat of claim 5, **characterized in that** the detachable power connection is a quick contact connection.

7. The seat of claim 5 or 6, **characterized in that** the power supply network is a low voltage DC power network.

8. The seat of one of claims 1 to 7, **characterized in that** the shutter (23) is designed as a rolling shutter or an attachment shutter.

9. The seat of one of claims 1 to 8, **characterized in that** the visual playback device (5) has a wireless data communication interface.

10. A vehicle with a plurality of seats of one of claims 1 to 9 and with an entertainment network in data communication with the visual playback device (5).

11. The vehicle of claim 10, **characterized in that** the plurality of seats each comprises a base of identical structure, while at least one visual playback device (5) of one seat (1) has a structure different from that of the visual playback devices (5) of the other seats (1).

## Revendications

1. Siège (1) pour véhicule, en particulier pour avion, comprenant un appareil de reproduction visuelle (5) intégré dans une surface (3) du siège (1), une base (7) reliée au siège (1) étant disposée dans la surface (3) du siège (1), l'appareil de reproduction visuelle (5) étant fixé sur la base (7) par l'intermédiaire d'un élément de retenue (9) adapté à l'appareil de reproduction visuelle (5) et à la base (7), l'appareil de reproduction visuelle pouvant être extrait de la base (7) au moyen d'une fixation amovible de l'élément de retenue (9) sur la base (7) et l'élément de retenue (9) comportant un cadre intérieur (11) dans lequel peut être inséré l'appareil de reproduction visuelle (5), et l'appareil de reproduction visuelle (5) étant fixé dans le cadre intérieur (11),
**caractérisé par**
un dispositif de sécurité (19) permettant de fixer l'élément de retenue (9) sur la base (7), le dispositif de sécurité (19) comportant un volet (23) destiné à recouvrir l'appareil de reproduction visuelle (5) et l'élément de retenue (9).

2. Siège selon la revendication 1, **caractérisé en ce que** l'appareil de reproduction visuelle (5) est une tablette informatique.

3. Siège selon la revendication 1 ou 2, **caractérisé en ce que** la base (7) consiste en un cadre extérieur dans lequel est inséré l'élément de retenue (9) avec l'appareil de reproduction visuelle (5).

4. Siège selon l'une des revendications 1 à 3, **caractérisé en ce que** la base (7) forme une cavité (10) dans la surface (3) du siège (1), l'appareil de reproduction visuelle (5) pouvant être inséré avec l'élément de retenue (9) dans la cavité (10) et de préférence en affleurant la surface (3) du siège (1).

5. Siège selon l'une des revendications 1 à 4, **caractérisé en ce que** la base (7) est reliée à un réseau d'alimentation électrique central, **en ce qu'**une connexion électrique amovible (15) est disposée entre la base (7) et l'élément de retenue (9), et **en ce que** l'élément de retenue (9) comporte une prise (17) pour le raccordement à l'alimentation de l'appareil de reproduction visuelle (5), l'appareil de reproduction visuelle (5) pouvant être raccordé au réseau d'alimentation électrique central via la base (7), la connexion électrique amovible (15) et l'élément de retenue (9).

6. Siège selon la revendication 5, **caractérisé en ce que** la connexion électrique amovible est une connexion à contact rapide.

7. Siège selon la revendication 5 ou 6, **caractérisé en ce que** le réseau d'alimentation électrique est un réseau à courant continu basse tension.

8. Siège selon l'une des revendications 1 à 7, **caractérisé en ce que** le volet (23) est réalisé sous la forme d'un volet roulant ou d'un volet à poser.

9. Siège selon l'une des revendications 1 à 8, **caractérisé en ce que** l'appareil de reproduction visuelle (5) comporte une interface de communication de données sans fil.

10. Véhicule équipé de plusieurs sièges selon l'une des revendications 1 à 9 et doté d'un réseau de divertissement qui est en liaison par communication de données avec l'appareil de reproduction visuelle (5).

11. Véhicule selon la revendication 10, **caractérisé en ce que** lesdits plusieurs sièges présentent chacun une base de structure identique, au moins un appareil de reproduction visuelle (5) d'un siège (1) étant de structure différente de celle des appareils de reproduction visuelle (5) des autres sièges (1).
